(19) Europäisches Patentamt
European Patent Office
Office européen des brevets

(11) **EP 2 085 941 B1**

(12) **FASCICULE DE BREVET EUROPEEN**

(45) Date de publication et mention
de la délivrance du brevet:
**29.02.2012 Bulletin 2012/09**

(51) Int Cl.:
***G08C 17/02*** *(2006.01)*

(21) Numéro de dépôt: **08021726.8**

(22) Date de dépôt: **15.12.2008**

(54) **Procédé de transmission de signaux à partir de boîtiers électroniques montés sur les roues d'un véhicule, à destination d'une unité centrale montée sur le dit véhicule**

Signalübertragungsverfahren für Steuergeräte, die auf den Rädern eines Fahrzeugs montiert sind, an eine Zentraleinheit, die auf dem entsprechenden Fahrzeug montiert ist

Method for transmitting signals from electronic boxes mounted on the wheels of a vehicle, directed to a central unit mounted on said vehicle

(84) Etats contractants désignés:
**DE ES GB IT**

(30) Priorité: **30.01.2008 FR 0800480**

(43) Date de publication de la demande:
**05.08.2009 Bulletin 2009/32**

(73) Titulaire: **Continental Automotive France
31100 Toulouse (FR)**

(72) Inventeur: **Costes, Olivier
31170 Tournefeuille (FR)**

(56) Documents cités:
**DE-A1-102006 009 899    JP-A- 2007 237 781
US-A- 4 390 880**

**Description**

L'invention concerne un procédé de transmission, à partir de boîtiers électroniques montés chacun sur une des roues d'un véhicule et à destination d'une unité centrale montée sur le dit véhicule, de signaux représentatifs de paramètres de fonctionnement de chaque roue comportant, en outre, un code d'identification de cette dernière.

De plus en plus de véhicules automobiles possèdent des systèmes de surveillance et/ou de mesures de paramètres comportant des capteurs montés sur le dit véhicule.

A titre d'exemple concernant de tels systèmes, il peut être cité les systèmes de surveillance de la pression des pneus comportant des capteurs montés sur chacune des roues de véhicules, dédiés à la mesure de paramètres, tels que pression et/ou température des pneumatiques équipant ces roues, et destinés à informer le conducteur de toute variation anormale du paramètre mesuré.

Ces systèmes de surveillance comportent classiquement :

> o monté sur chacune des roues du véhicule, un boîtier électronique intégrant les capteurs de mesure, un microprocesseur et un émetteur radiofréquence,
> o et, montée sur le véhicule, une unité centrale de réception des signaux émis par les boîtiers électroniques, dotée d'un calculateur intégrant un récepteur radiofréquence connecté à une antenne.

On connaît de l'art antérieur JP 2007 237781 A, en accord avec le preamble de la revendication 1, l'utilisation de quatre récepteurs radio RF (radio fréquence), au lieu d'un seul intégré dans l'unité centrale, disposés à proximité de chaque boitier et relié électroniquement à l'unité centrale. Ces récepteurs reçoivent les signaux émis par les boitiers et les retransmettent à l'unité centrale. Un tel système a l'avantage d'être peu sensible au bruit parasite, mais reste d'un coût relativement élevé du fait de l'utilisation de quatre récepteurs au lieu d'un seul situé dans l'unité centrale.

Une des techniques envisageables en vue de la transmission des signaux à partir des boîtiers électroniques à destination de l'unité centrale consiste en la technique d'étalement de spectre qui permet de transmettre les signaux sur une largeur de bande plusieurs fois supérieure à la largeur de bande d'un signal à bande étroite.

A cet effet, selon cette technique d'étalement de spectre, chaque signal transmis est étalé à partir d'un code indépendant des données transmises, code qui est également utilisé, au niveau de la réception, en vue de « dé-étaler » (décoder) les signaux et de permettre la récupération des données utiles.

Une telle technique d'étalement de spectre s'avère notamment, très peu sensible au bruit parasite et très efficace lors de la présence de trajets multiples, propriétés qui conduisent avantageusement :

> o à augmenter les performances des procédures de localisation des boîtiers électroniques et donc à diminuer les temps requis par ces procédures,
> o et à accroître les performances radiofréquences lors de la transmission des signaux représentatifs des paramètres de fonctionnement des roues.

Cependant si les communications entre chaque boîtier et l'unité centrale sont toutes réalisées selon la technique d'étalement de spectre en utilisant un code d'étalement / dé-étalement identique unique, et s'il y a collision entre les différents messages (ce qui est relativement fréquent puisqu'il n'existe pas de synchronisation entre les instants d'émission des différents messages des unités roues), il devient alors impossible de décoder chaque message envoyé par les boîtiers électroniques et d'affecter une origine prédéterminée à chaque message (localisation de chaque roue). L'impossibilité de décoder les signaux reçus rend ce type de communication à code d'étalement unique inutilisable.

Pour éviter de telles collisions, on connaît de l' art antérieur DE 10 2006 009 899 un récepteur d'ondes radiofréquence dont la largeur de bande est réglable selon les types de signaux qu'il reçoit. Par exemple, un premier type de signaux provient du système d'ouverture « mains libres » de portière d'un véhicule, c'est à dire sans clé et avec l'aide d'un badge émettant un signal radio fréquence et un deuxième type de signaux provient du système de contrôle de la pression des pneumatique, équipés des boitiers décrits précédemment. Chacun de ces systèmes envoient des signaux RF à ce récepteur en utilisant des largeurs de bande différentes. Pour recevoir ces signaux, le récepteur module sa largeur de bande réceptrice à partir des données véhicules, qui renseignent sur le système qui doit être activé. Ainsi si le véhicule est à l'arrêt, le récepteur module sa largeur de bande sur celle du système d'ouverture « mains libres » de portière afin de recevoir le signal correspondant, et de même si le véhicule roule, le récepteur module sa largeur de bande sur celle du système de contrôle de la pression des pneumatiques afin de recevoir le signal de ce système. Ainsi les collisions d'ondes RF entre les différents systèmes du véhicule sont évitées. Cependant un tel récepteur n'est pas applicable au système de surveillance des pneus car il ne permet pas de différencier différentes origines dans le cadre d'une même fonction, par conséquent, il ne peut pas distinguer les signaux envoyés par chacun des boitiers, car ceux ci envoient leurs signaux quand le véhicule est dans une seule et même condition c'est à dire en déplacement.

Au contraire, si l'on utilise une technique d'étalement de spectre avec un code d'étalement / dé-étalement différent pour chaque boitier électronique, alors il est nécessaire dans un premier temps d'apprendre à l'unité centrale montée sur le véhicule l'ensemble des codes d'étalement / dé-étalement des boitiers du véhicule. Dans ce cas la procédure est plus longue et complexe.

On pourrait éviter ce problème d'apprentissage des codes d'étalement / dé-étalement en utilisant une procédure de transmission classique (RF, LF par exemple) pour transmettre les différents codes d'étalement / dé-étalement de chacun des boitiers, puis une procédure à étalement de spectre pour les transmissions ultérieures (afin de bénéficier des avantages de ce type de transmission). Cependant cela nécessiterait d'équiper tous les véhicules de deux moyens de transmission différents (un avec étalement de spectre et un sans). Le coût du système résultant en deviendrait prohibitif.

La présente invention a pour objet un procédé de transmission mettant en oeuvre une technique d'étalement de spectre la plus simple possible, dans laquelle les collisions entre les messages ne provoquent pas d'impossibilités de décodage pour l'unité centrale et utilisant un seul type de technique de transmission à étalement de spectre.

A cet effet, l'invention vise un procédé de transmission, à partir de boîtiers électroniques montés chacun sur une des roues d'un véhicule, et à destination d'une unité centrale montée sur le dit véhicule, de signaux représentatifs de paramètres de fonctionnement de chaque roue comportant, en outre, un code d'identification de cette dernière, le dit procédé de transmission consistant à mettre en oeuvre, en vue de l'émission de chaque signal, une technique d'étalement de spectre, et se caractérisant en ce qu'il consiste

    o dans une phase préalable, à affecter :

- à chaque boîtier électronique et à l'unité centrale, un premier code orthogonal d'étalement générique commun identique pour les dits boîtiers électroniques et l'unité centrale,
- et à chaque boîtier électronique, un second code orthogonal d'étalement spécifique au dit boîtier électronique,
- à mettre en oeuvre une procédure d'initialisation consistant à engendrer l'émission par chaque boîtier électronique d'un signal étalé à partir du premier code d'étalement générique commun, • incorporant le second code orthogonal d'étalement spécifique et le code d'identification du dit boîtier électronique, afin que l'unité centrale recueille automatiquement l'ensemble des codes spécifiques des boitiers présents sur le véhicule,

    o puis à mettre en oeuvre une procédure de transmission consistant à engendrer l'émission par chaque boîtier électronique d'un signal étalé à partir du second code d'étalement spécifique du dit boîtier électronique.

Selon l'invention, toutes les procédures successives (apprentissage des codes d'étalement spécifiques par l'unité centrale, localisation des boîtiers électroniques, transmission des paramètres de fonctionnement des roues) utilisent une seule et même technique de transmission consistant en la technique d'étalement de spectre.

Du fait de cette uniformisation, toutes les transmissions sont effectuées par le biais d'un canal de transmission unique, et le procédé global de transmission s'avère ainsi simplifié à l'extrême.

On rappelle qu'un code est dit orthogonal lorsque multiplié par lui même il redonne la donnée de départ. Ainsi la donnée de départ est multipliée une première fois par un code orthogonal pour engendrer le message à spectre étalé (au niveau du boitier électronique) et est multipliée une deuxième fois par ce même code au niveau de l'unité centrale pour "dé-étaler" le signal et réobtenir la donnée de départ.

Selon un mode de mise en oeuvre avantageux, le second code orthogonal d'étalement spécifique à chaque boîtier électronique consiste en un code aléatoire généré à partir du code d'identification du dit boîtier électronique.

Par ailleurs, chaque signal étalé est avantageusement modulé en radiofréquence puis intégré dans une onde porteuse de fréquence prédéterminée.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

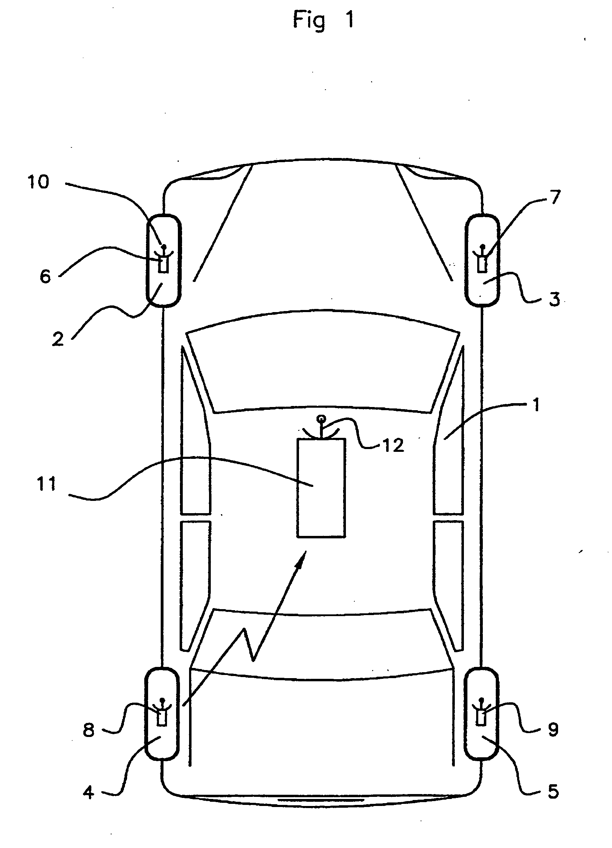

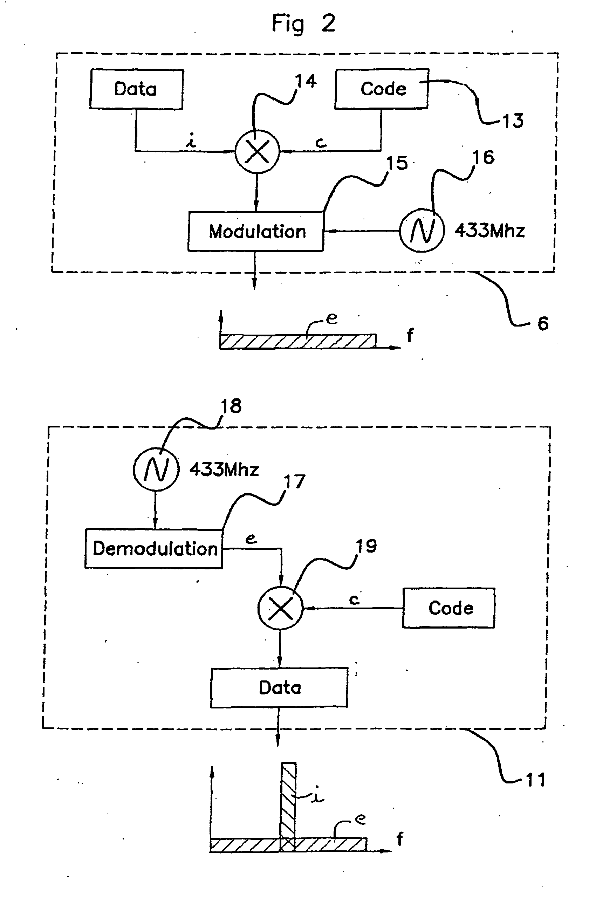

    o **la figure 1** est une vue de dessus schématique d'un véhicule doté d'un système de surveillance permettant la mise en oeuvre du procédé de transmission selon l'invention, et
    o **la figure 2** est un schéma illustrant le principe de la technique d'étalement de spectre mise en oeuvre selon l'invention.

Le système de surveillance mettant en oeuvre le procédé de transmission selon l'invention est représenté, sur la figure 1, monté sur un véhicule 1 muni de quatre roues 2-5 chaussées classiquement chacune d'un pneumatique.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre des capteurs dédiés à la mesure de paramètres, tels que pression, température, accélération... connectés à une unité de calcul à microprocesseur reliée à un émetteur connecté à une antenne 10.

Le système de surveillance comprend, également, un calculateur centralisé ou unité centrale 11 située dans le véhicule 1, comportant un microprocesseur et intégrant un récepteur relié à une antenne 12 apte à recevoir les signaux émis par chacun des quatre boîtiers électroniques 6-9.

De façon usuelle, un tel système de surveillance et notamment son unité centrale 11 sont conçus de façon à informer le conducteur de toute variation anormale des paramètres mesurés par les capteurs associés aux roues 2-5.

Selon l'invention, toutes les transmissions de signaux effectuées à partir des boîtiers électroniques 6-9 à destination de l'unité centrale 11 sont réalisées par la mise en oeuvre de la technique d'étalement de spectre.

On rappelle que dans le cas de cette technique d'étalement de spectre, le message initial (i) -figure 2- envoyé par l'unité roue est multiplié par un code d'étalement (c) de manière à obtenir un message étalé (e). Ainsi:

$$i \times c = e.$$

Ce message étalé est ensuite reçu par l'unité centrale 11 et multiplié une seconde fois par le même code d'étalement (c) de manière à réobtenir le message initial (i) car e x c = i. On rappelle en effet que lorsque l'on utilise un code dit orthogonal la multiplication du message étalé (e) par le code orthogonal initial (c) redonne le message initial.

Tel qu'illustré à la figure 2, et en premier lieu en vue de l'implémentation de cette technique d'étalement de spectre, chaque boîtier électronique 6-9 intègre :

  o un générateur 13 de code orthogonal d'étalement apte à générer le dit code à partir du code d'identification ID du boîtier électronique 6-9, par exemple au moyen d'un algorithme connu de génération de code aléatoire orthogonal tel que notamment algorithme WALSH, décalage successif...
  o un multiplieur 14 adapté pour multiplier les données (i) à transmettre, c'est-à-dire le signal bande étroite, par le code aléatoire généré,
  o et un modulateur radiofréquence 15 apte à moduler en radiofréquence le signal étalé, et à intégrer ce dernier dans une onde porteuse de fréquence égale à 433 Mhz, par exemple, générée par un oscillateur 16.

En vue de l'implémentation de cette technique d'étalement de spectre, l'unité centrale 11 intègre quant à elle, en vue de permettre la récupération des données, c'est à dire leur décodage:

  o un démodulateur radiofréquence 17 associé à un oscillateur 433 Mhz 18,
  o et un multiplieur 19 adapté pour multiplier le signal démodulé par le même code aléatoire que celui utilisé dans le boîtier électronique émetteur 6-9.

De plus, en vue de la mise en oeuvre de la technique d'étalement de spectre, l'apprentissage par l'unité centrale 11 des codes d'étalement spécifiques Ci des boîtiers électroniques 6-9, nécessaires au pilotage du multiplieur 19 de la dite unité centrale, consiste :

  o dans une phase préalable, à affecter :

  • à chaque boîtier électronique 6-9 et à l'unité centrale 11, un premier code orthogonal d'étalement générique (Cg) commun identique pour les dits boîtiers électroniques et unité centrale,
  • et à chaque boîtier électronique 6-9, un second code orthogonal d'étalement spécifique (Ci) au dit boîtier électronique et fourni par le générateur 13,

  o puis à mettre en oeuvre une procédure d'initialisation consistant à engendrer l'émission par chaque boîtier électronique 6-9 d'un signal étalé (e) à partir du code d'étalement générique commun (Cg), incorporant le second code orthogonal d'étalement spécifique (Ci) et le code d'identification (ID) du dit boîtier électronique.

Ainsi lors de la phase préalable le code d'étalement générique (Cg) (commun à toutes les unités roues et à l'unité centrale 11) est utilisé pour que tous les messages transmis par les unités roues soient reçus et décodés par l'unité centrale.

Chaque message reçu en provenance d'une unité roue comporte le code d'étalement spécifique (Ci) de cette unité roue et son identifiant propre ID. L'unité centrale établit alors une liste L dans laquelle chaque identifiant ID d'unité roue est associé à un code d'étalement spécifique Ci c'est à dire dans le cas d'un véhicule à quatre roues (C1, C2, C3, C4).

Ensuite, en fonctionnement normal, c'est à dire dés que la liste L ci-dessus indiquée est établie le code d'étalement générique Cg n'est plus utilisé. Chaque unité roue utilise alors son code d'étalement spécifique Ci. Comme l'unité centrale 11 dispose d'une liste L de ces codes spécifiques (Ci) d'étalement elle est capable de décoder tout signal reçu et de l'associer à un identifiant déterminé (ID) qu'elle sait par ailleurs localiser sur le véhicule. Ainsi l'unité centrale sait par exemple que la roue avant droite porte l'identifiant ID1 et transmet ses messages avec le code d'étalement C1.

L'utilisation d'une technique d'étalement de spectre pour communiquer entre l'unité roue et l'unité centrale permet de diminuer la sensibilité au bruit de cette communication.

Le code d'étalement générique Cg n'est utilisé que pour l'acquisition des codes d'étalement spécifiques (C1 à C4) ou à chaque permutation ou changement de pneu. Ce code générique peut également être réutilisé à chaque démarrage de véhicule pour mettre à jour la liste L des codes spécifiques et des identifiants ID.

Le reste des communications entre les unités roues et l'unité centrale se fait en utilisant les codes d'étalement spécifiques (C1 à C4 - si le véhicule a quatre roues). Ceci permet de résoudre outre le problème de sensibilité aux bruits parasites le problème de collisions entre messages provenant d'unité roues différentes.

Ainsi une fois cet apprentissage des codes spécifiques (C1 à C4) réalisé lui-même par la mise en oeuvre de la technique d'étalement de spectre, les transmissions ultérieures sont également réalisées par la mise en oeuvre d'une technique d'étalement de spectre, conduisant notamment, de façon avantageuse :

 o à augmenter les performances des procédures de localisation des boîtiers électroniques 6-9 et donc à diminuer les temps requis par ces procédures,
 o et à accroître les performances radiofréquences lors de la transmission des signaux représentatifs des paramètres de fonctionnement des roues 2-5.

Bien entendu, la présente invention n'est pas limitée au mode de réalisation ci dessus décrit. Par exemple il est possible d'utiliser le code générique de manière périodique pour réinitialiser le système de surveillance de la pression des pneus régulièrement.

**Revendications**

**1.** Procédé de transmission, à partir de boîtiers électroniques (6-9) montés chacun sur une des roues (2-5) d'un véhicule (1), et à destination d'une unité centrale (11) montée sur le dit véhicule, de signaux représentatifs de paramètres de fonctionnement de chaque roue (2-5) comportant, en outre, un code d'identification (ID) de cette dernière, le dit procédé de transmission consistant à mettre en oeuvre, en vue de l'émission de chaque signal, une technique d'étalement de spectre, et **se caractérisant en ce qu'**il consiste

 o dans une phase préalable, à affecter :

  • d'une part, à chaque boîtier électronique (6-9) et à l'unité centrale (11), un premier code orthogonal d'étalement générique (Cg) commun identique pour tous les dits boîtiers électroniques (6-9) et l'unité centrale (11),
  • et, d'autre part, à chaque boîtier électronique (6-9), un second code orthogonal d'étalement spécifique (Ci) au dit boîtier électronique,
  • à mettre en oeuvre une procédure d'initialisation consistant à engendrer l'émission par chaque boîtier électronique (6-9) d'un signal étalé (e) à partir du premier code d'étalement générique commun (Cg), incorporant le second code orthogonal d'étalement spécifique (Ci) et le code d'identification (ID) du dit boîtier électronique,

 o puis à mettre en oeuvre une procédure de transmission consistant à engendrer l'émission par chaque boîtier électronique (6-9) d'un signal étalé (e) à partir du second code d'étalement spécifique (Ci) du dit boîtier électronique.

**2.** Procédé de transmission selon la revendication 1 **caractérisé en ce que** le second code orthogonal d'étalement spécifique (Ci) à chaque boîtier électronique (6-9) consiste en un code aléatoire généré à partir du code d'identification (ID) du dit boîtier électronique.

**3.** Procédé de transmission selon l'une des revendications 1 ou 2 **caractérisé en ce que** chaque signal étalé (e) est modulé en radiofréquence puis intégré dans une onde porteuse de fréquence prédéterminée.

**Claims**

**1.** Method of transmission from electronic packages (6-9), each one of which is mounted on one of the wheels (2-5) of a vehicle (1), to a central unit (11) mounted on said vehicle, of signals representative of operational parameters of each wheel (2-5) and furthermore comprising an identification code (ID) of the latter, said transmission method consisting in using, for the transmission of each signal, a spread spectrum technique, and being **characterized in that** it consists

 o in an preliminary phase, in allocating:

  • on the one hand, to each electronic package (6-9) and to the central unit (11), a first common generic orthogonal spread code (Cg) identical for all of said electronic packages (6-9) and the central unit (11),
  • and, on the other hand, to each electronic package (6-9), a second orthogonal spread code (Ci) specific to said electronic package,
  • in using an initializing procedure consisting in causing the transmission by each electronic package (6-9) of a spread signal (e) on the basis of the first common generic spread code (Cg), incorporating the second specific orthogonal spread code (Ci) and the identification code (ID) of said electronic package,

 o then in using a transmission procedure consisting in causing the transmission by each electronic package (6-9) of a spread signal (e) on the basis of the second specific spread code (Ci) of said electronic package.

2. Transmission method according to Claim 1, **characterized in that** the second orthogonal spread code (Ci) specific to each electronic package (6-9) consists of a random code generated from the identification code (ID) of said electronic package.

3. Transmission method according to one of Claims 1 or 2, **characterized in that** each spread signal (e) is modulated at radio frequency and then integrated in a carrier wave of predetermined frequency.


**Patentansprüche**

1. Verfahren zur Übertragung von Signalen, die Betriebsparameter jedes Rades (2-5) repräsentieren und, unter anderem, einen Identifizierungscode (ID) dieses Letzteren umfassen, von Elektronikeinheiten (6-9), die jeweils an einem der Räder (2-5) eines Fahrzeugs (1) angebracht sind, zu einer am Fahrzeug angebrachten Zentraleinheit (11), wobei das Übertragungsverfahren darin besteht, in Hinsicht auf das Senden jedes Signals eine Technik der spektralen Spreizung anzuwenden, und **dadurch gekennzeichnet ist, dass** es darin besteht,

   o in einem vorangehenden Schritt

      • zum einen jeder Elektronikeinheit (6-9) und der Zentraleinheit (11) einen ersten, generischen orthogonalen Spreizcode (Cg) zuzuweisen, der allen Elektronikeinheiten (6-9) und der Zentraleinheit (11) gemeinsam und identisch ist,
      • und zum anderen jeder Elektronikeinheit (6-9) einen zweien orthogonalen Spreizcode (Ci) zuzuweisen, der für die Elektronikeinheit spezifisch ist,
      • eine Initialisierungsprozedur auszuführen, die darin besteht, dass jede Elektronikeinheit (6-9) zum Senden eines Signals (e) veranlasst wird, das ausgehend von dem ersten, gemeinsamen generischen orthogonalen Spreizcode (Cg) gespreizt ist und den zweiten, spezifischen orthogonalen Spreizcode (Ci) sowie den Identifizierungscode (ID) der Elektronikeinheit enthält,

   o danach eine Übertragungsprozedur auszuführen, die darin besteht, dass jede Elektronikeinheit (6-9) zum Senden eines Signals (e) veranlasst wird, das ausgehend von dem zweiten orthogonalen Spreizcode (Ci), der für die Elektronikeinheit spezifisch ist, gespreizt ist.

2. Übertragungsverfahren nach Anspruch 1, **dadurch gekennzeichnet, dass** der zweite orthogonale Spreizcode (Ci), der für jede Elektronikeinheit (6-9) spezifisch ist, aus einem Zufallscode besteht, der aus dem Identifizierungscode (ID) der Elektronikeinheit erzeugt wird.

3. Übertragungsverfahren nach einem der Ansprüche 1 und 2, **dadurch gekennzeichnet, dass** jedes gespreizte Signal (e) hochfrequenzmoduliert und dann einer Trägerwelle bestimmter Frequenz aufgeprägt wird.

## Fig 1

## Fig 2

**EP 2 085 941 B1**

## RÉFÉRENCES CITÉES DANS LA DESCRIPTION

**Documents brevets cités dans la description**

- JP 2007237781 A

- DE 102006009899